# EUROPÄISCHE PATENTSCHRIFT

(11) **EP 3 708 460 B1**
(45) Veröffentlichungstag und Bekanntmachung des Hinweises auf die Patenterteilung: **06.03.2024**
(21) Anmeldenummer: 20168259.8
(22) Anmeldetag: 21.10.2016
(51) Int. Cl.: B62B 3/14, B62B 5/06

(54) **TRANSPORTWAGEN MIT KINDERSITZ**
TRANSPORT TROLLEY WITH CHILD SEAT
CHARIOT DE TRANSPORT AVEC PORTE-BEBE

(30) Priorität: 02.11.2015 DE 202015105816 U; 02.11.2015 DE 202015009019 U
(43) Veröffentlichungstag der Anmeldung: 16.09.2020
(62) Teilanmeldung aus: 16784911.6
(73) Patentinhaber: Wanzl GmbH & Co. KGaA, 89340 Leipheim (DE)
(72) Erfinder: Webert, Dirk, 89340 Leipheim (DE); Daminger, Johann, 89223 Neu-Ulm, Burlafingen (DE); Eichele, Hermann, 89340 Leipheim (DE); Riesenegger, Markus, 89358 Kammeltal (DE); Maier, Ralf, 89340 Leipheim (DE); Gerstmaier, Michael, 89441 Obermedlingen (DE); Ruf, Paul, 87745 Eppishausen (DE); Wiedemann, Georg, 87757 Kirchheim (DE); Gasche, Thomas, 89340 Leipheim (DE); Horn, Karl-Heinz, 86381 Krumbach/Niederraunau (DE)

(56) Entgegenhaltungen:
- EP-A1- 0 672 568
- WO-A1-03/047940
- US-A1- 2007 063 464

## Beschreibung

Die vorliegende Erfindung betrifft einen Kindersitz für einen stapelbaren Transportwagen, insbesondere einen stapelbaren Einkaufswagen, sowie einen stapelbaren Transportwagen.

Aus dem Stand der Technik sind bereits stapelbare Transportwägen, insbesondere Einkaufswägen bekannt. Derartige Transportwägen weisen insbesondere ein Fahrgestell mit Rollen und mit Holmen auf. An den Holmen ist ein Korb angeordnet, der meist aus Draht oder Kunststoff hergestellt ist. Ferner ist das Fahrgestell mit einem Schiebegriff ausgestattet, an dem ein Münzpfandschloss angebracht sein kann. Auch weisen derartige Transportwagen in der Regel eine Ladeplattform auf, auf der beispielsweise Getränkekisten abgestellt werden können.

Ein derartiger Transportwagen ist beispielsweise aus der DE 10 2014 101 504 A1 bekannt. Weitere Transportwägen sind beispielsweise aus der US 2010/0327545 A1, der CN 202669890 U sowie der ES 1 114 605 bekannt.

Mit der Anbindung der Rollen an das Fahrgestell bei derartigen Transportwägen befassen sich beispielsweise die EP 0 760 295 B1, die US 7,350,269 B2, die US 2014/0137368 A1, um nur einige Beispiele zu nennen.

Aus der EP 1 451 053 B1 ist ein Kindersitz für einen Einkaufswagen bekannt, der aus Kunststoff ausgebildet ist und aus einem Sitz sowie zwei ortsfest miteinander verbundenen Bauteilen besteht, die eine Rückenlehne ausbilden.

Weiterhin ist aus der EP 0 672 568 A1 ein aus Kunststoff gebildeter Einkaufswagen mit einem Kindersitz bekannt. Die Rückenlehne des Kindersitzes weist Verstärkungsstreben und Öffnungen auf.

Weiterhin ist in der US 2007/0063465 A1 ein Einkaufswagen mit einem Kindersitz offenbart, der eine Rücklehne mit kreisförmigen Öffnungen aufweist.

Die WO 03/047940 A1 zeigt weiterhin einen Einkaufwagen mit einem Kindersitz und einer Rückenlehne. Die Rückenlehne ist aus zwei Bauteilen gebildet. Diese können ortsfest miteinander verbunden werden. Teilabschnitte der Rückenlehne sind hierbei hohlkörperartig ausgebildet. Innenliegende Verstärkungsrippen geben der Rückenlehne Stabilität. Weiterhin zeigt die Rückenlehne eine tendenziell H-förmige Form.

Es ist die Aufgabe der vorliegenden Erfindung, einen stapelbaren Transportwagen der eingangs genannten Art sowie einen Kindersitz für einen Transportwagen der eingangs genannten Art in vorteilhafter Weise weiterzubilden, insbesondere dahingehend, dass dieser einfach aufgebaut sein kann und gleichzeitig stabil und haltbar ausgestattet ist, insbesondere bei Ausbildung des Korbes des Transportwagens sowie des Kindersitzes durch Kunststoff.

Diese Aufgabe wird erfindungsgemäß gelöst durch einen Kindersitz für einen stapelbaren Transportwagen mit den Merkmalen des Anspruchs 1. Danach ist vorgesehen, dass
ein Kindersitz für einen stapelbaren Transportwagen mit einer aus Kunststoff bestehenden, um eine horizontale Achse verschwenkbar am Transportwagen anzuordnenden Rückenlehne, an welcher wenigstens ein Sitz schiebebeweglich oder verschwenkbar angekoppelt ist, wobei die Rückenlehne einstückig ausgebildet ist und wobei zumindest ein Teilabschnitt der Rückenlehne hohlkörperartig ausgebildet ist, wobei die Rückenlehne hohlkörperartige Holme aufweist, die im Inneren mit Verstärkungsstreben versehen sind, wobei die Verstärkungsstreben an den außenliegenden Schmalseiten der Holme ersichtlich sind, wobei zwischen den Verstärkungsstreben Hohlräume vorgesehen sind, die im montierten Zustand im Bereich der Rückenlehnenwand über auf der dem Korbinneren zugewandten Seite der Rücklehne angebrachten Öffnungen, insbesondere Schlitze zugänglich sind und wobei die Rückenlehne im Wesentlichen H- förmig ausgebildet ist und und wobei die Verbindung der beiden Schenkel der H-Form als Rückenlehnenwand ausgebildet ist.

Bei dem stapelbaren Transportwagen kann es sich insbesondere um einen stapelbaren Einkaufswagen handeln.

Der stapelbare Transportwagen basiert auf dem Grundgedanken, einen vergleichsweise einfach gestalteten Tragrahmen bereitzustellen, der einfach gefertigt werden kann und sodann auf dem Tragrahmen mittels eines Drahtgestells, das durch einfach zu biegende Drähte erstellt werden kann, eine Möglichkeit bereitzustellen, mittels derer der Korb auf dem Tragrahmen getragen werden kann. Dies ermöglicht es, einen stapelbaren Transportwagen einfach aufzubauen und hierdurch die Fertigungskosten für den stapelbaren Transportwagen signifikant zu senken. Das Drahtgestell kann beispielsweise durch Biegen von Drähten ausgebildet werden. Die zu verwendenden Drähte können beispielsweise verzinkte Stahldrähte sein, die eine Stärke zwischen 8-20 mm aufweisen können. Denkbar ist beispielsweise, eine Drahtstärke zwischen 10-15 mm, vorzugsweise zwischen 12-14 mm, insbesondere ca. 13 mm zu wählen.

Insbesondere ist denkbar, dass der Tragrahmen U-förmig ausgebildet ist. Durch die U-förmige Ausbildung des Tragrahmens ist es beispielsweise möglich, den Tragrahmen durch Ablängen von Halbzeugen, wie beispielsweise Rohren, zu erstellen und den Tragrahmen sodann U-förmig zu biegen. Dies ermöglicht eine einfache Bereitstellung des Tragrahmens und durch die Verwendung von z.B. Halbzeugen ist eine kostengünstige Fertigung möglich.

Des Weiteren kann vorgesehen sein, dass im montierten Zustand des Transportwagens die freien Enden des Tragrahmens heckseitig des Transportwagens angeordnet sind. Eine derartige Gestaltung ermöglicht eine gute Stapelbarkeit, da hierdurch ein weiterer Transportwagen im Zusammenhang mit dem Stapeln der Transportwägen einfach in einen bereits abgestellten Transportwagen eingeschoben werden kann. Die Öffnung des U-förmigen Tragrahmens dient somit auch zur Aufnahme des einzuschiebenden Transportwagens.

Des Weiteren kann vorgesehen sein, dass der Tragrahmen sich nur in einer Ebene befindet. Dies bedeutet insbesondere, dass die Biegung des Tragrahmens sich nur in einer einzigen Ebene abspielt, wodurch eine komplexe Formgebung des Tragrahmens vermieden wird. So wird beispielsweise eine aufwändige Nachbearbeitung und/oder Wärmebehandlung des Tragrahmens vermieden, es genügt vielmehr, das Grundmaterial des Tragrahmens entsprechend zu bearbeiten, insbesondere zu biegen, um die Form des Tragrahmens zu erstellen.

Des Weiteren kann vorgesehen sein, dass das Drahtgestell zwei Drahtbügel aufweist, die auf dem Tragrahmen aufsitzen. Dadurch wird ein einfacher Aufbau des Fahrgestells ermöglicht, nämlich einerseits eine Grundebene, die durch den Tragrahmen bereitgestellt wird und hierauf aufbauend ein Drahtgestell durch die beiden Drahtbügel, die hierdurch den entsprechenden Aufbau ermöglichen, der die Aufgabe hat, den Korb zu tragen.

Die beiden Drahtbügel können im Wesentlichen U-förmig ausgebildet sein. In diesem Zusammenhang ist auch denkbar, dass die beiden Drahtbügel im Wesentlichen nur eine Biegung in einer einzigen Ebene aufweisen bzw. dass nur ein kleiner Teil sich aus der Biegeebene des Drahtbügels heraus erstreckt. Dadurch wird eine einfache Formgebung der Drahtbügel ermöglicht, was die Gestehung des Drahtgestells vereinfacht.

Die beiden Drahtbügel können identisch ausgebildet sein. Dadurch wird ebenfalls die Herstellung vereinfacht, da nicht nach beispielsweise linken oder rechten Drahtbügeln unterschieden werden muss.

Außerdem kann vorgesehen sein, dass die Drahtbügel wenigstens drei gerade Abschnitte aufweisen. Hierdurch wird erreicht, dass eine stabile Struktur für das Drahtgestell herbeigeführt werden kann. Denkbar ist, dass die drei geraden Abschnitte des Drahtbügels zusammen mit dem Tragrahmen des Untergestells eine im Wesentlichen viereckige bzw. trapezartige Form definieren.

Außerdem kann vorgesehen sein, dass im montierten Zustand der Korb zumindest teilweise auf dem mittleren Abschnitt des Drahtbügels aufgesetzt ist. Dadurch wird es möglich, den Korb nicht nur punktuell, sondern auch über eine größere Strecke abzustützen, was die Stabilität des gesamten Transportwagens insgesamt verbessert.

Des Weiteren kann vorgesehen sein, dass im frontseitigen Bereich des mittleren Abschnitts des Drahtbügels eine horizontale Querverstrebung angeordnet ist. Hierdurch wird ebenfalls der Korb, insbesondere der Bodenbereich des Korbes abgestützt und auch verstärkt. Dies ermöglicht es, den Korb derart zu verstärken, dass die Gewichtskraft der eingelegten Waren in den Transportkorb sicher aufgenommen werden kann.

Darüber hinaus kann vorgesehen sein, dass die Drahtbügel symmetrisch, bezogen auf die Längsachse des Transportwagens, angeordnet sind. Durch die symmetrische Anordnung ergibt sich eine gleichmäßige Krafteinleitung vom Korb über das Drahtgestell in den Tragrahmen und von dort in die Rollen des Transportwagens. Außerdem ist denkbar, dass die Drahtbügel an den freien Enden des Tragrahmens angeordnet sind. Dies erleichtert die Stapelbarkeit und gleichzeitig auch eine in sich geschlossene Struktur, die eine gleichmäßige Kraft und Belastungsverteilung im gesamten Transportwagen im Betrieb ermöglicht.

Außerdem ist es möglich, dass am Tragrahmen an seinen freien Enden jeweils ein Rohrstück angesetzt ist.

In dieses Rohrstück kann, zumindest teilweise, ein erstes freies Ende eines Drahtbügels eingesetzt werden. Hierdurch wird die Positionierung des Drahtbügels relativ zum Tragrahmen bei der Montage erleichtert. Außerdem wird durch die Aufnahme eines freien Endes des Drahtbügels in das Rohrstück die Stabilität der Konstruktion verbessert.

Ein zweites freies Ende eines Drahtbügels kann auf dem Tragrahmen aufliegen. Dort kann dieses freie Ende auf dem Tragrahmen beispielsweise aufgeschweißt sein.

In das Rohrstück kann teilweise ein Element einer Rollenanbindung einer Rolle des Transportwagens eingesetzt sein. Hierdurch werden durch das Rohrstück mehrere Funktionen übernommen und dadurch eine Gewichtsreduktion durch Funktionsintegration in ein Bauelement des Transportwagens ermöglicht.

In weiterer möglicher Ausgestaltung kann vorgesehen sein, dass das Drahtgestell weiter einen Drahtrahmen mit zwei aufragenden Korbbefestigungsbügeln aufweist. Hierdurch wird eine einfache und sichere Befestigung des Korbes auf dem Drahtgestell ermöglicht. Diese bügelartige Struktur ist gut geeignet, die durch den Korb übertragenen Belastungskräfte aufzunehmen.

Die Höhe der Korbbefestigungsbügel kann abhängig von der Korbgröße gewählt werden. Denkbar ist aber auch, dass die Größe der Korbbefestigungsbügel stets baugleich ist, und lediglich die Größe des Korbes und das entsprechende Gegenstück des Korbes, das auf die Korbbefestigungsbügel aufgesetzt wird, entsprechend angepasst wird.

Die beiden Korbbefestigungsbügel können V-förmig ausgebildet sein. Die V-Struktur ermöglicht eine sichere Anbindung des Korbes an das Drahtgestell und gleichzeitig eine gleichmäßige Krafteinleitung vom Korb in das Drahtgestell. Denkbar ist insbesondere, dass die Schenkel der V-Form enggestellt sind. Hierdurch wird eine gewisse Steifigkeit und erhöhte Stabilität erreicht. Auch können so größere Kräfte übertragen werden.

Insbesondere kann vorgesehen sein, dass die Spitzen der Korbbefestigungsbügel im montierten Zustand des Korbes auf den Korbbefestigungsbügeln unterhalb des Griffes enden. Hierdurch wird die Konstruktion insgesamt vereinfacht und dadurch Kosten gesenkt. Allerdings ist dies nicht zwingend erforderlich. Sofern man beispielsweise die Bauhöhe des Korbes bei gleichbleibenden Abmessungen der Korbbefestigungsbügel verringern möchte, könnte die Spitze der Korbbefestigungsbügel auch in den Bereich des Griffes hineinragen.

Denkbar ist insbesondere, dass der Drahtrahmen einstückig ausgebildet ist. Somit wird es möglich, durch Biegen eines einzigen Drahtes den Drahtrahmen auszubilden. Der Drahtrahmen kann, bezogen auf den montierten Zustand des Transportwagens, frontseitig jeweils ein freies Ende aufweisen, das jeweils auf einem der Drahtbügel aufliegt. Dieses freie Ende kann somit auf dem Drahtbügel nach entsprechender Positionierung bei der Montage beispielsweise lediglich mittels eines Schweißpunktes befestigt werden. Der Korb kann auf die Korbbefestigungsbügel aufgeschoben werden. Dies erleichtert die Montage und Befestigung des Korbes auf dem Drahtrahmen. Durch die Einstückigkeit des Drahtrahmens wird es weiter möglich, auf Querstreben zu verzichten. Insbesondere kann die üblicherweise bislang vorhandene heckseitige Querstrebe entfallen.

Der Korb kann Korbbefestigungsbügelaufnahmen aufweisen, die beispielsweise rohrartig ausgebildet sind.

Die Korbbefestigungsbügelaufnahmen können als Öffnungen im Korb ausgeführt sein, in die die Korbbefestigungsbügel eingeschoben werden können bzw. mittels derer der Korb auf die Korbbefestigungsbügel aufgeschoben werden kann.

Diese Öffnungen müssen jedoch nicht vollständig die Korbbefestigungsbügel umgreifen, es kann auch genügen, dass die Aufnahme nicht vollständig umgreift, sondern nur als teilweise die Korbbefestigungsbügel umgreifende Wandung ausgeführt ist.

Grundsätzlich ist also denkbar, dass die Korbbefestigungsbügelaufnahme nur als Führung ausgebildet ist, denkbar ist aber auch, dass die Korbbefestigungsbügelaufnahme als rohrartige Aufnahme im Korb ausgebildet ist, in die der Korbbefestigungsbügel zumindest teilweise bzw. im Wesentlichen vollständig aufgenommen werden kann.

Außerdem ist es möglich, dass der Korb mittels wenigstens eines Sperrklips auf dem Korbbefestigungsbügel gegen Abziehen gesichert ist. Denkbar ist beispielsweise, einen zweiteiligen Sperrklip, der in eine entsprechende Öffnung im Korb eingeklipst wird, nach dem Aufsetzen des Korbes auf die Korbbefestigungsbügel. In diesem Zusammenhang ist insbesondere denkbar, dass die V-förmigen Korbbefestigungsbügel umgekehrt V-förmig auf dem Drahtbügel angeordnet sind, so dass die Spitze des V im montierten Zustand nach oben zeigt. Im Bereich der Spitze kann sodann der Sperrklip eingesetzt werden und verhindert somit sicher ein Abziehen des Korbes vom Korbbefestigungsbügel. Eine kostengünstige und einfache Montage wird hierdurch möglich.

Grundsätzlich könnte aber an Stelle eines Sperrklips auch eine Schraube bzw. eine Schrauben-Mutter-Kombination eingesetzt werden.

Des Weiteren kann vorgesehen sein, dass der Korb auf dem Drahtgestell aufgeklipst ist. Hierzu können beispielsweise Sperrklinken im Bodenbereich des Korbes vorgesehen sein, mittels derer der Korb auf dem Drahtgestell fixiert ist. Die Sperrklinken können dabei versetzt zueinander angeordnet sein, so dass diese im montierten Zustand die Drähte des Drahtgestells umgreifen.

Insbesondere kann vorgesehen sein, dass der Korb Verrastungsklinken aufweist, mittels derer der Korb im montierten Zustand auf dem Drahtgestell aufgeklipst ist. Mittels der Verrastungsklinken kann eine einfache, zuverlässige und stabile Verklipsung des Korbes auf dem Drahtgestell ermöglicht werden.

Darüber hinaus kann vorgesehen sein, dass der Korb zumindest teilweise eine Neststruktur aufweist. Durch eine nestartige Strukturierung der Wandungen des Korbes kann insbesondere erreicht werden, dass neben einer ausreichenden bisher guten Stabilität der Materialeinsatz verringert werden kann. Außerdem kann durch die nestartige Struktur erreicht werden, dass eine Verschmutzung der Wandungen des Korbes vermieden wird.

Die Neststruktur kann durch mehrere Neststreben ausgebildet sein. Diese Neststreben können insbesondere in mehreren Richtungen und schräg zueinander angeordnet sein. Insbesondere ist auch nicht erforderlich, dass eine regelmäßige Strukturierung der Stege bzw. der Neststreben erforderlich ist. Denkbar ist aber beispielsweise, dass die sich gegenüberliegenden Seitenwände in der Struktur ähneln bzw. symmetrisch ausgebildet sind.

Die Neststreben für eine Seitenwand des Korbes können im dem Boden zugewandten Bereich einen größeren Querschnitt aufweisen als in dem Bereich, der der Korböffnung zugewandt ist. Dies weist den Vorteil auf, dass hierdurch die Stabilität im montierten Zustand im dem Boden zugewandten Bereich erhöht ist. Der Querschnitt kann rund, oval oder in einer anderen entsprechenden geeigneten Form, bzw. Freiform, ausgebildet sein. Grundsätzlich ist auch denkbar, dass eine Variation des Querschnitts über die gesamte Höhe der Neststrebe möglich ist und hier auch entsprechend variiert wird.

Insbesondere kann vorgesehen sein, dass der Korb ein Kunststoffkorb ist. Hierdurch werden die Materialkosten gesenkt und insgesamt die Gestehungskosten verringert.

Im montierten Zustand kann der Korb mit einem Schiebegriff verbunden sein, wobei der Schiebegriff zwei Einschubblätter aufweist und wobei der Korb zwei abgeschrägte Einschuböffnungen aufweist, in die die Einschubblätter im montierten Zustand verrastend eingesetzt sind. Durch die Abschrägung der Einschuböffnungen kann erreicht werden, dass die Krafteinleitung über den Schiebegriff in den Korb und vom Korb in das Fahrgestell günstig möglich ist. Die Abschrägung ermöglich zudem eine direkte Krafteinleitung und erleichtert auch ein Verrasten des Schiebegriffs im Korb. Insbesondere wird auch das möglicherweise entstehende Biegemoment verringert da der Schiebegriff über entsprechende gegenstückartig ausgebildete Anschlagflächen verfügen kann, die an den abgeschrägten Einschuböffnungen am Rand der abgeschrägten Einschuböffnungen jeweils ansetzen.

Insbesondere kann vorgesehen sein, dass die Einschuböffnung doppelt abgeschrägt ist.

Ein Einschubblatt kann wenigstens eine Versteifungsrippe, insbesondere mehrere Versteifungsrippen aufweisen. Dadurch wird die Steifigkeit des Einschubblattes bzw. die Anbindung des Schiebegriffs an den Korb verbessert.

Das Einschubblatt kann im Wesentlichen mittig geteilt sein in eine obere Einschubblatthälfte und eine untere Einschubblatthälfte. Dadurch kann eine Aufteilung des Kraftflusses vom Schiebegriff in den Korb besser gesteuert werden.

Der Schiebegriff und die Einschubblätter können einstückig ausgeführt werden.

Zwischen den Einschubblatthälften kann ein bolzenartiges Sicherungselement (beispielsweise ein Schraubbolzen) im montierten Zustand eingesetzt sein, um ein Abziehen des Schiebegriffs aus dem Korb im montierten Zustand zu verhindern. So ist beispielsweise denkbar, dass im Korb in der Einschuböffnung ein Einschraubgewinde vorgesehen ist, in das ein Schraubbolzen durch das Einschubblatt hindurch bzw. durch eine entsprechende Ausnehmung im Schiebegriff eingeschraubt werden kann.

Im montierten Zustand kann zwischen dem Einschubblatt und einer Wandung der Einschubblattöffnung als ein Kennzeichnungschip, insbesondere ein RFID-Chip, angeordnet sein. Hierdurch kann eine Identifikation des Einkaufswagens ermöglicht werden. Denkbar ist, die Zugehörigkeit des Transportwagens zu einem Markt in den Kennzeichnungschip einzuspeichern und diesen sodann entsprechend auslesen zu können. Ein derartiges Kennzeichnungschip kann zur Diebstahlsprävention eingesetzt werden.

Außerdem kann vorgesehen sein, dass der Korb im montierten Zustand frontseitig eine nestartige Frontwand aufweist, die durch eine die Frontwand überdeckende Überdeckungswandung, die ins Korbinnere hineinragt, überdeckt ist.

Die Überdeckungswandung kann teilweise wulstartig ausgebildet sein. Durch eine derartige wulstartige Umwandung wird eine Schutzfunktion der eingelegten Ware gegen Herausfallen ausgebildet.

Darüber hinaus ermöglicht die wulstartige Umwandung ein verbessertes Aufprallverhalten auf einen anderen Transportwagen beim Stapeln mehrerer Transportwagen ineinander, so dass eine wulstartige Struktur der Überdeckungswandung gleichzeitig eine günstige Dämpfungswirkung hat.

Durch die Überdeckungswandung, die beispielsweise auch wulstartig oder massiv ausgebildet sein kann, wird eine Anschlagfläche definiert, die insbesondere beim Stapeln von mehreren Transportwägen von Vorteil ist. Hierdurch wird erreicht, dass der Korb in dem Bereich verstärkt wird, in dem er beim Stapelvorgang hohen Belastungen wie Schlägen, Aufprallkräften oder dergleichen ausgesetzt ist. Darüber hinaus wird durch die Überdeckungswandung erreicht, dass Waren beim Abbremsen des Transportwagens nicht aus dem Korb in Folge von Trägheitskräften oder Trägheitseffekten herausfallen können.

Die Überdeckungswandung kann ein Informationsfeld aufweisen. Ein derartiges Informationsfeld kann beispielsweise Werbungsinformationen, das Logo der Einzelwarenhandelskette oder auch sonstige Werbung aufweisen.

Dadurch, dass die Überdeckungswandung beispielsweise wulstartig und ins Korbinnere hineinragend ausgeführt ist, wird darüber hinaus eine Schutzfunktion gegen das Verkratzen des Informationsfeldes ermöglicht.

Dies ist insbesondere darauf zurückzuführen, dass das Informationsfeld nicht die Aufprallfläche des Transportwagens ist, wenn dieser in einen anderen Transportwagen beim Stapeln hineingeschoben wird. Dadurch wird es möglich, beispielsweise Werbeinformationen im Informationsfeld zu hinterlegen und diese nicht durch beispielsweise Verkratzen optisch abzuwerten.

Das Informationsfeld kann eine transparente Abdeckung aufweisen, die im Randbereich des Informationsfeldes einklipsbar ist. Hierdurch wird erreicht, dass die eingebrachte Werbung einerseits ausgetauscht werden kann, andererseits aber auch durch die transparente Abdeckung geschützt ist.

Des Weiteren betrifft die vorliegende Erfindung einen Kindersitz für einen stapelbaren Transportwagen. Insbesondere kann es sich bei dem stapelbaren Transportwagen um den vorgenannten Transportwagen handeln. Der Kindersitz weist eine aus Kunststoff bestehende, um eine horizontale Achse verschwenkbar am Transportwagen anzuordnende Rückenlehne auf, an welcher wenigstens ein Sitz schiebebeweglich oder verschwenkbar angekoppelt ist, wobei die Rückenlehne einstückig ausgebildet ist und wobei zumindest ein Teilabschnitt der Rückenlehne hohlkörperartig ausgebildet ist.

Durch die Einstückigkeit der Rückenlehne und den hohlkörperartigen Ausbau wird es möglich, eine leicht bauende und gleichzeitig stabile Struktur für die Rückenlehne bereitzustellen. Hierdurch kann insgesamt der Aufbau des Kindersitzes für einen stapelbaren Transportwagen vereinfacht werden. Der Kindersitz kann zumindest teilweise, z.B. im Bereich der Holme eine Sandwichstruktur aufweisen.

Die Rückenlehne ist im Wesentlichen H-förmig ausgebildet. Die H-förmige Struktur ermöglicht es insbesondere, unter geringem Materialeinsatz eine ausreichend stabile und tragfähige Struktur für einen Kindersitz auszubilden.

Des Weiteren ist vorgesehen, dass die Verbindung der beiden Schenkel der H-Form als Rückenlehnenwand ausgebildet ist. Dadurch wird in einfacher und gleichzeitig funktionaler Art und Weise eine Verbindung der beiden Holme hergestellt und gleichzeitig materialsparend eine Rückenlehnenwand ausgebildet.

Die Rückenlehne weist hohlkörperartige Holme auf, die im Inneren mit Verstärkungsstreben versehen sind. Hierdurch wird eine Struktur bereitgestellt, die ausreichend steif und gleichzeitig materialsparend ausgebildet ist.

Zwischen den Verstärkungsstreben sind Hohlräume vorgesehen, die im montierten Zustand im Bereich der Rückenlehnenwand auf der dem Korbinneren zugewandten Seite der Rückenlehne angebrachte Öffnungen, insbesondere Schlitze, zugänglich sind. Hierdurch wird erreicht, dass einfach durch Spritzgießen die Rückenlehne ausgebildet werden kann und gleichzeitig auch im Bereich der Rückenlehnenwand in den hohlkörperartigen Holmen Hohlkörper vorgesehen sein können.

Zwischen den Verstärkungsstreben können Hohlräume vorgesehen sein, die im montierten Zustand im Bereich unterhalb der Rückenlehnenwand auf der Holminnenseite befindliche Öffnungen zugänglich sind. Dadurch wird es möglich, auch hier Hohlräume vorzusehen, so dass auch hier Materialansammlungen vermieden werden können.

Weitere Einzelheiten und Vorteile der Erfindung sollen nun anhand eines in den Zeichnungen dargestellten Ausführungsbeispiels näher erläutert werden.

Es zeigen:
- Fig. 1: eine perspektivische Ansicht auf ein Ausführungsbeispiel eines erfindungsgemäßen stapelbaren Transportwagens, hier einen stapelbaren Einkaufswagen;
- Fig. 2: eine perspektivische Ansicht auf das Fahrgestell des Transportwagens gemäß Fig. 1;
- Fig. 3: eine perspektivische Ansicht auf einen Teil des Drahtgestells des Fahrgestells des Transportwagens gemäß Fig. 1;
- Fig. 4: eine Seitenansicht auf den Korb des Transportwagens gemäß Fig. 1;
- Fig. 5: eine Draufsicht auf den Korb gemäß Fig. 4;
- Fig. 5a: Detail G gemäß Angabe in Fig. 5;
- Fig. 5b: Detail H gemäß Angabe in Fig. 5;
- Fig. 6: eine perspektivische Explosionszeichnung auf Fahrgestell und Korb des Transportwagens gemäß Fig. 1;
- Fig. 7: eine Detaildarstellung des Korbs sowie des Sperrklips;
- Fig. 8: eine perspektivische Draufsicht auf einen Teil des Drahtgestells sowie den Sperrklip gemäß Fig. 7;
- Fig. 9: eine perspektivische Ansicht auf einen Teil des Schiebegriffs des Transportwagens gemäß Fig. 1;
- Fig. 10: eine weitere Ansicht des Schiebegriffs gemäß Fig. 9;
- Fig. 11: eine weitere perspektivische Ansicht auf den Schiebegriff gemäß Fig. 9;
- Fig. 12: eine perspektivische Ansicht auf den Schiebegriff sowie die Einschuböffnungen des Korbes;
- Fig. 13: eine perspektivische Frontansicht auf den Korb;
- Fig. 14: eine Heckansicht des Korbes;
- Fig. 15: Detail E gemäß Angabe in Fig. 14;
- Fig. 16: eine perspektivische Ansicht auf den Kindersitz des Transportwagens gemäß Fig. 1;
- Fig. 17: eine weitere perspektivische Ansicht auf den Kindersitz gemäß Fig. 16;
- Fig. 18: eine weitere perspektivische Ansicht auf den Kindersitz gemäß Fig. 16;
- Fig. 19: eine Seitenansicht auf den Kindersitz gemäß Fig. 16; und
- Fig. 20: Detail A gemäß Angabe in Fig. 19.

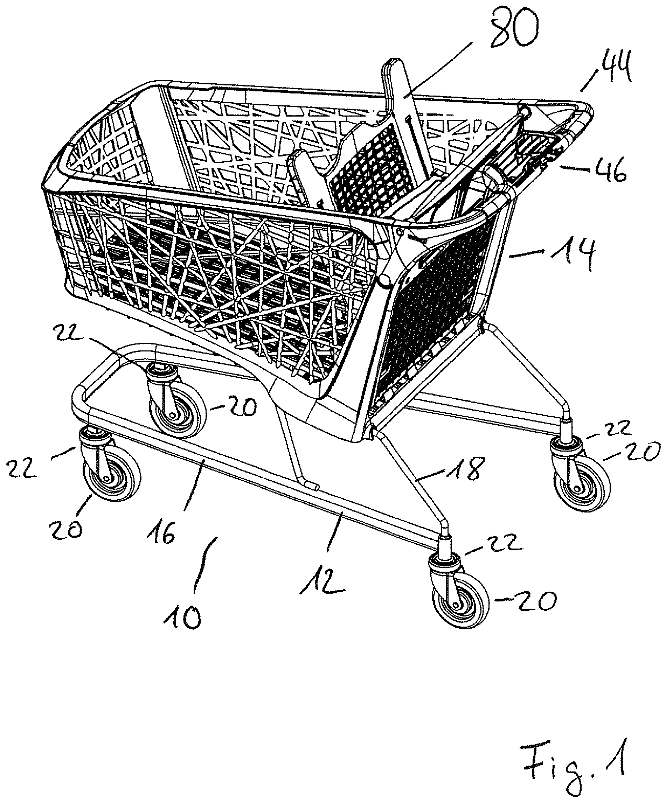

Fig. 1 zeigt in perspektivischer Ansicht ein Ausführungsbeispiel eines erfindungsgemäßen stapelbaren Transportwagens 10, hier eines stapelbaren Einkaufswagens 10.

Der Einkaufswagen 10 weist ein Fahrgestell 12 sowie einen Korb 14 auf.

Das Fahrgestell 12 weist weiter einen Tragrahmen 16 und ein auf dem Tragrahmen 16 angeordnetes Drahtgestell 18, wobei das Drahtgestell 18 den Korb 14 trägt. Am Tragrahmen 16 sind vier Räder 20 über jeweilige Radaufhängungen 22 befestigt.

Der Tragrahmen 16 ist dabei aus einem Halbzeug gebogen und U-förmig ausgebildet.

Im montierten Zustand des Einkaufswagens 10 sind die freien Enden des Tragrahmens 16 heckseitig des Einkaufswagens 10 angeordnet.

Der Tragrahmen 16 selbst ist planar ausgebildet, d.h. er befindet sich in einer Ebene. Mit anderen Worten verhält es sich somit so, dass die Biegung des Tragrahmens 16 lediglich in einer Ebene erfolgt, so dass der Tragrahmen lediglich zweidimensional und nicht dreidimensional gebogen ist.

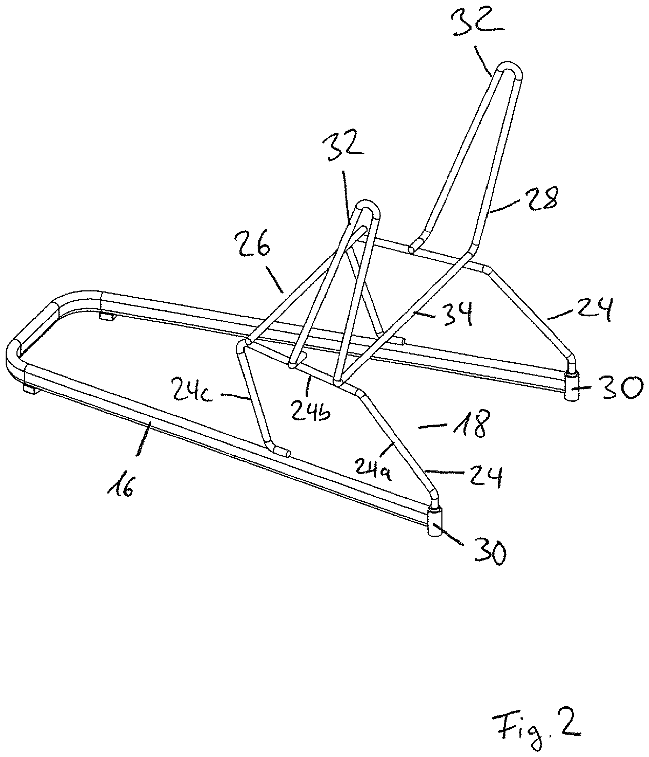

Wie sich dies weiter aus Fig. 2 ergibt, die den Tragrahmen 16 und das darauf angeordnete Drahtgestell 18 zeigt, besteht das Drahtgestell 18 aus zwei Drahtbügeln 24, einer Querstrebe 26 (auch Querverstrebung 26) und einem Drahtrahmen 28.

Das Drahtgestell 18 weist zwei Drahtbügel 24 auf, die auf dem Tragrahmen 16 aufsitzen.

Die Drahtbügel 24 sind im Wesentlichen U-förmig ausgebildet.

Der Drahtbügel 24 weist weiter drei gerade Abschnitte 24a, 24b und 24c auf.

Beide Drahtbügel 24 sind dabei identisch ausgebildet.

Im montierten Zustand, wie in Fig. 1 gezeigt, wird der Korb 14 zumindest teilweise auf dem mittleren Abschnitt 24b des Drahtbügels 24 aufgesetzt.

Im frontseitigen Bereich des mittleren Abschnitts 24b des Drahtbügels 24 ist die horizontale Querverstrebung 26 angeordnet.

Des Weiteren sind die Drahtbügel 24 an den freien Enden des Tragrahmens 16 angeordnet und darüber hinaus symmetrisch bezogen auf die Längsachse des Einkaufswagens 10 angeordnet.

Am Tragrahmen 16 ist jeweils an den freien Enden ein Rohrstück 30 angesetzt.

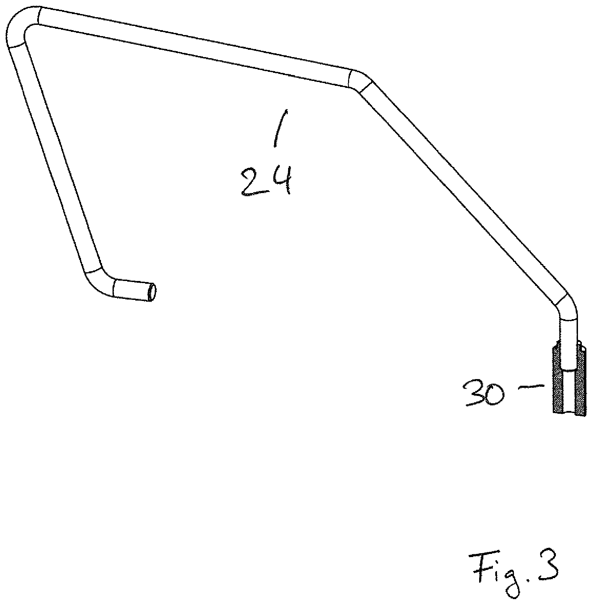

In das Rohrstück 30 ist jeweils zumindest teilweise ein erstes freies Ende des Drahtbügels 24 eingesetzt, und zwar gemäß Fig. 2 das freie Ende des Drahtbügels 24, das an den ersten geraden Abschnitt 24a des Drahtbügels 24 anschließt (vgl. Fig. 3).

Ein zweites freies Ende des Drahtbügels 24 liegt auf dem Tragrahmen 16 auf, hier das freie Ende des Drahtbügels 24, das an den dritten Abschnitt 24c des Drahtbügels 24 anschließt.

Weiter ist in dem Rohrstück 30 ein Element der Radaufhängung 22 des Rades 20 des Einkaufswagens 10 eingesetzt.

Der Drahtrahmen 28 weist weiter zwei aufragende Korbbefestigungsbügel 32 auf.

Die Korbbefestigungsbügel 32 sind im Wesentlichen identisch ausgebildet und zwar V-förmig.

Der Drahtrahmen 28 ist darüber hinaus einstückig ausgebildet.

Der Drahtrahmen 28 weist bezogen auf den montierten Zustand des Einkaufswagens 10 heckseitig weiter eine Querstrebe 34 auf, die die beiden Korbbefestigungsbügel 32 miteinander verbindet.

Außerdem weist der Drahtrahmen 28 bezogen auf den montierten Zustand des Einkaufswagens 10 frontseitig jeweils ein freies Ende auf, das jeweils auf einem der Drahtbügel 24 aufliegt. Die beiden freien Enden zeigen dabei nach innen bezogen auf den montierten Zustand des Drahtgestells 18.

Der Drahtrahmen 28 weist den Vorteil auf, dass es sich dabei nur um ein einziges Bauteil handelt, das gleichzeitig stabil ist. Auf dem Drahtbügel wird dieses ortsfest, beispielsweise durch Schweißen befestigt.

Mittels des Drahtrahmens 28 können Belastungskräfte des Korbes 14 aufgenommen werden und gleichzeitig eine Querverbindung durch die Querstrebe 34 bereitgestellt werden.

Ein derartiger Drahtrahmen 28 ist einfach herstellbar, wobei sämtliche Bestandteile des Drahtgestells aus einem Draht mit einer Stärke im Bereich zwischen 10-15 mm, beispielsweise ca. 13 mm, hergestellt werden können.

Bei dem Draht kann es sich insbesondere um Vollmaterial handeln. Denkbar ist aber auch ein entsprechendes Rohr zu verwenden.

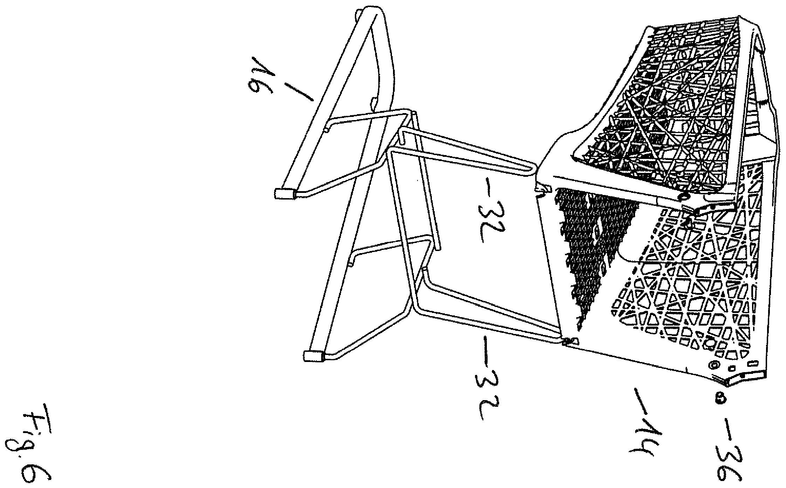

Der Korb 14 ist auf die Korbbefestigungsbügel 32 aufgeschoben und hierdurch getragen. Der Korb 14 weist hierzu zwei Korbbefestigungsbügelaufnahmen auf, in die die Korbbefestigungsbügel 32 eingeschoben werden. Gleichzeitig sitzt der Boden des Korbes 14 auf den Querstreben 26 und 34 auf (vgl. Fig. 6).

Wie dies weiter aus den Figuren 6, 7 und 8 gezeigt ist, wird der Korb 14 mittels eines zweiteiligen Sperrklips 36, der aus zwei Hälften 36a und 36b besteht, gegen Abziehen gesichert.

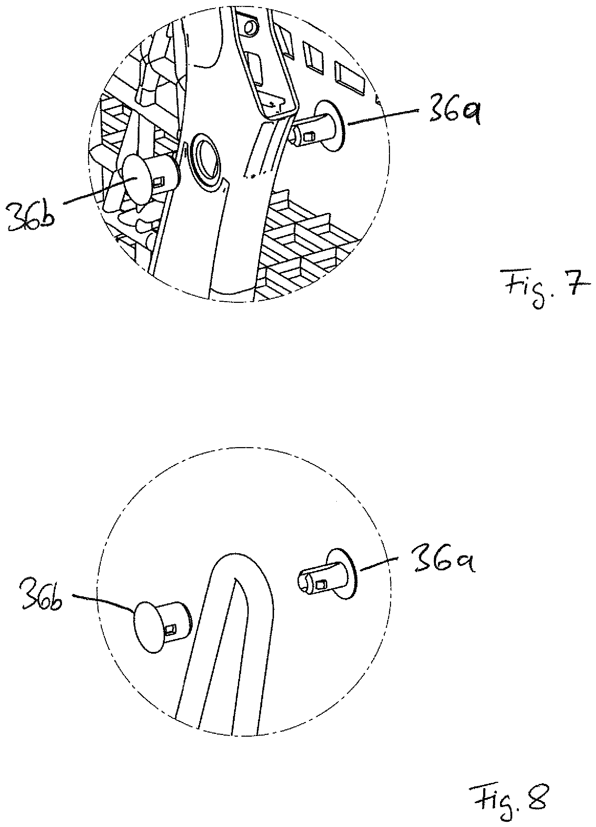

Wie dies insbesondere aus Fig. 8 ersichtlich ist, wird der Sperrklip 36 derart eingesetzt, dass er in der Spitze des V-förmigen Korbbefestigungsbügels 32 derart verklipst wird, dass er nicht nach oben abgezogen werden kann. Wie dies weiter aus Fig. 7 ersichtlich ist, wird der Sperrklip 36 durch eine entsprechende Öffnung im Korb 14 eingesetzt und dort verklipst.

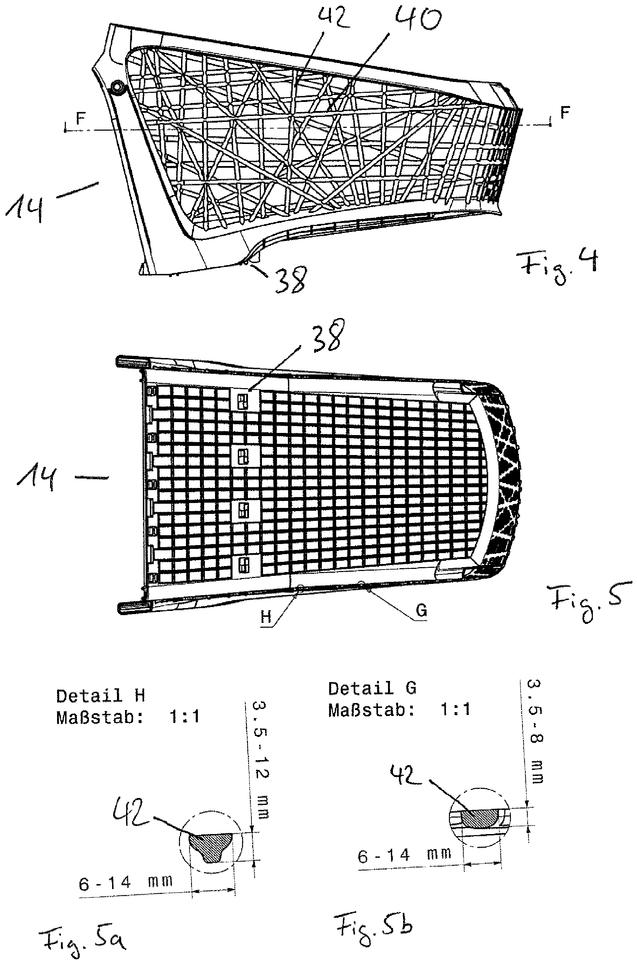

Wie dies weiter aus den Figuren 4 und 5 ersichtlich ist, weist der Korb 14 in seinem Bodenbereich Verrastungsklinken 38 auf, mittels derer der Korb 14 auf dem Drahtgestell 18 verklipst wird.

Die Seitenwände des Korbes 14 sind durch eine Neststruktur 40 ausgebildet, wobei die Neststruktur 40 durch mehrere Neststreben 42 ausgebildet ist. Dabei sind die Neststreben 42 für eine Seitenwand des Korbes 14 im dem Boden zugewandten Bereich derart ausgebildet, dass sie dort einen größeren Querschnitt aufweisen als in dem Bereich, der der Korböffnung zugewandt ist. Dies ist beispielsweise aus Fig. 5 sowie den Details H und G gemäß Fig. 5a und Fig. 5b ersichtlich.

Der Korb 14 selbst ist als Kunststoffkorb ausgebildet.

Wie dies weiter aus Fig. 1 ersichtlich ist, ist der Korb 14 im montierten Zustand mit einem Schiebegriff 44 verbunden.

Der Schiebegriff 44 weist in üblicher Form ein Münzpfandsystem 46 auf, wobei der Einsatz eines derartigen Münzpfandsystems 46 nicht zwingend, sondern optional ist.

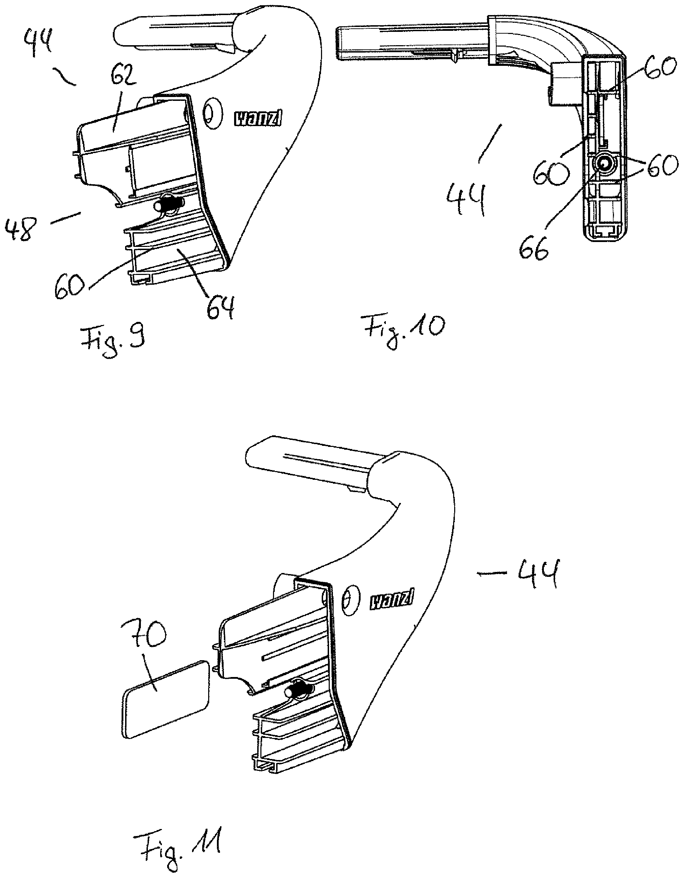

Wie weiter in den Figuren 9 bis 11 gezeigt ist, ist zur Anbindung des Schiebegriffs 44 an den Korb 14 der Schiebegriff 44 beidseitig mit zwei Einschubblättern 48 versehen, mittels derer der Schiebegriff 44 in den Korb 14 eingesetzt werden kann.

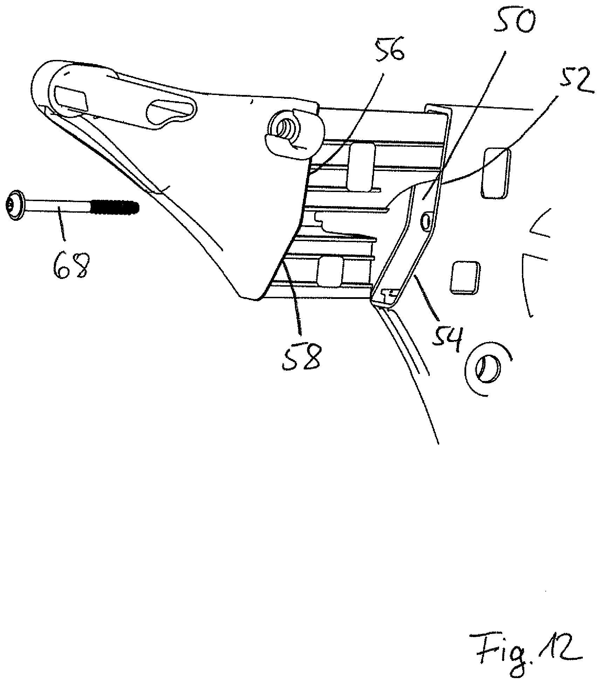

Hierzu weist der Korb 14, wie aus Fig. 12 ersichtlich, beidseitig eine Einschuböffnung 50 auf.

Die Einschuböffnung 50 ist dabei doppelt abgeschrägt mit einer ersten Schräge 52 und einer zweiten Schräge 54.

Gegen den Rand dieser Schrägen 52 und 54 der Einschuböffnung 50 werden die gegenstückartig ausgebildeten Anschläge 56 und 58 des Schiebegriffs 44 im montierten Zustand angestellt.

Die Einschubblätter 48 des Schiebegriffs 44 sind im montierten Zustand in die Einschuböffnungen 50 verrastend eingesetzt.

Wie dies weiter aus Fig. 10 ersichtlich ist, weisen die Einschubblätter 48 mehrere Versteifungsrippen 60 auf, die sich senkrecht aus der Ebene des Einschubblatts heraus erheben und mehrfach T-förmig das Einschubblatt 48 strukturieren.

Das Einschubblatt 48 ist im Wesentlichen mittig geteilt in eine obere Einschubblatthälfte 62 und eine untere Einschubblatthälfte 64.

Wie dies insbesondere aus Fig. 10 und Fig. 12 ersichtlich ist, ist zwischen den beiden Einschubblatthälften 62 und 64 eine Bolzenaufnahme 66 vorgesehen, durch die eine Befestigungsschraube 68 eingeschraubt werden kann, um eine zusätzliche Sicherung gegen Abziehen des Schiebegriffs 44 aus der Einschuböffnung 50 des Korbes 14 bereitzustellen.

Bei dem bolzenartigen Sicherungselement 68, das hier als Schraubbolzen bzw. Schraube ausgebildet ist, kann es sich auch um eine andere geeignete Art eines bolzenartigen Sicherungselements 68 handeln.

Wie weiter aus Fig. 11 ersichtlich ist, kann im montierten Zustand zwischen dem Einschubblatt 48 und einer Wandung der Einschubblattöffnung 50 ein Kennzeichnungschip 70, hier ein RFID-Chip, angeordnet sein.

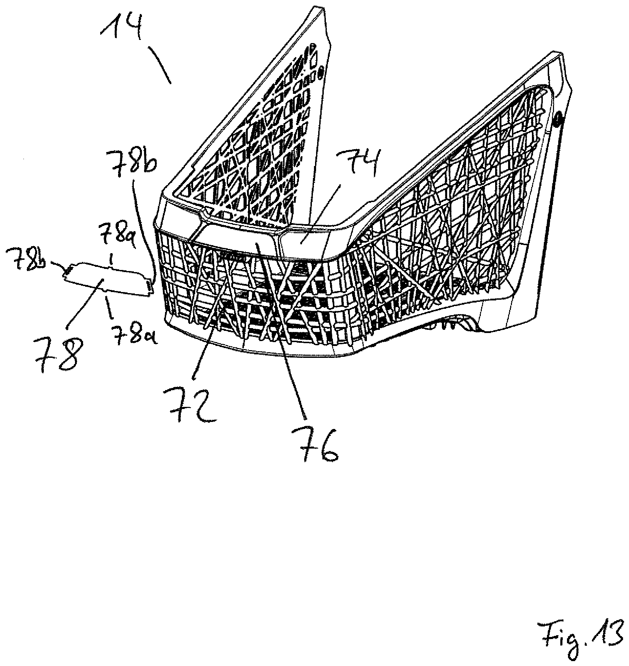

Wie weiter aus Fig. 13 ersichtlich ist, weist der Korb 14 im montierten Zustand frontseitig eine nestartige Frontwand 72 auf, die aus mehreren Neststreben 42 ausgebildet ist.

Des Weiteren ist im Frontbereich des Korbes 14 eine Überdeckungswandung 74 vorgesehen, die die obere Kante der Frontwand 72 überdeckt. Die Überdeckungswandung 74 ragt in das Korbinnere des Korbes 14 hinein und bildet somit eine Art Prallverstärkung und Rückhaltewand für in den Korb 14 eingelegte Waren.

Die Überdeckungswandung 74 weist weiter ein Informationsfeld 76 auf.

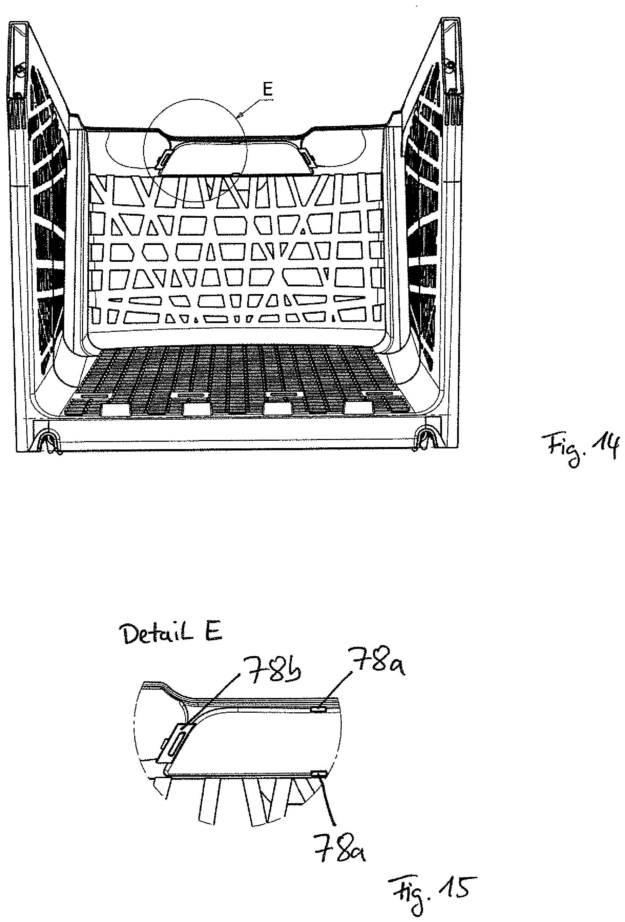

Das Informationsfeld 76 ist wiederum mit einer transparenten Abdeckung 78 versehen, die im Randbereich des Informationsfelds 76 einklipsbar ist (vgl. auch Fig. 14 und Fig. 15, die die Einklipslaschen 78a und 78b der transparenten Abdeckung 78 zeigen).

Für die Aufnahmen der Laschen 78a und 78b ist randseitig des Informationsfelds 76 jeweils eine entsprechende Einklipsöffnung vorgesehen.

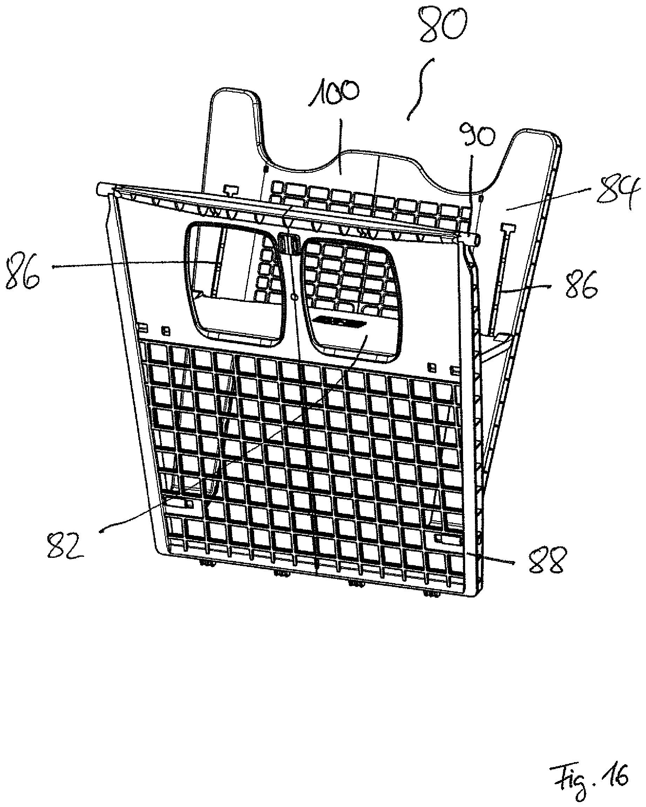

In den Figuren 16 bis 20 ist ein Kindersitz 80 für den Einkaufswagen 10 gezeigt.

Der in Fig. 16 dargestellte Kindersitz 80 für einen Einkaufswagen 10, wie in Fig. 1 dargestellt, ist in der Gebrauchslage dargestellt.

Der Kindersitz 80 weist ein Sitzbrett 82 auf, sowie eine Rückenlehne 84. Das Sitzbrett 82 ist schiebebeweglich oder verschwenkbar mit der Rückenlehne 84 verbunden und hier in zwei Schiebelängsführungen 86 geführt. Die Rückseite des Korbes 14 des Einkaufswagens 10 wird durch die Wand 88 ausgebildet, die sich um eine oben liegende horizontale Achse 90 in das Korbinnere des Korbes 14 verschwenken lässt.

Die Rückenlehne 84 ist mit ihrer unteren Begrenzung 92 oder mit nach unten führenden Stützen 94 ebenfalls um eine horizontale Achse 96, die sich im unteren Bereich der Wand 88 befindet, an dieser begrenzt verschwenkbar gelagert.

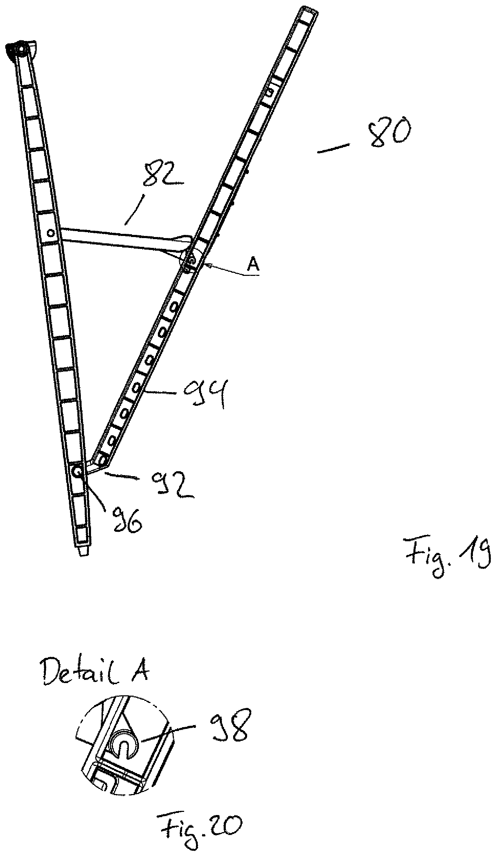

Dies ist im Detail auch in Fig. 19 gezeigt.

Das Sitzbrett 82 ist weiter entweder verschwenkbar oder schiebebeweglich an der Wand 88 gelagert.

Diese Art von Anordnung und Konstruktion ist bereits aus dem Stand der Technik bekannt, beispielsweise aus der EP 1 451 053 B1.

Die Rückenlehne 84 lässt sich an die Wand 88 heranschwenken, während sich die Wand 88 mit Sitzbrett 82 und Rückenlehne 84 zum Zwecke des Ineinanderschiebens mehrerer Einkaufswagen 10 um die horizontale Achse 90 in das Korbinnere des Korbes 14 schwenken lässt.

Im ausgeklappten Zustand der Rückenlehne 84 kann das Sitzbrett 82 in der Schiebeführung 86 nach unten geführt werden und dort entsprechend mittels einer Rastnase 98 verrastet werden. Dies ist im Detail in den Figuren 19 und 20 gezeigt. Die Rückenlehne 84 ist einstückig ausgebildet und im Wesentlich hohlkörperartig ausgebildet.

Darüber hinaus ist die Rückenlehne 84 im Wesentlichen H-förmig ausgebildet, wobei die Verbindung der beiden Schenkel der H-Form als Rückenlehnenwand 100 ausgebildet ist.

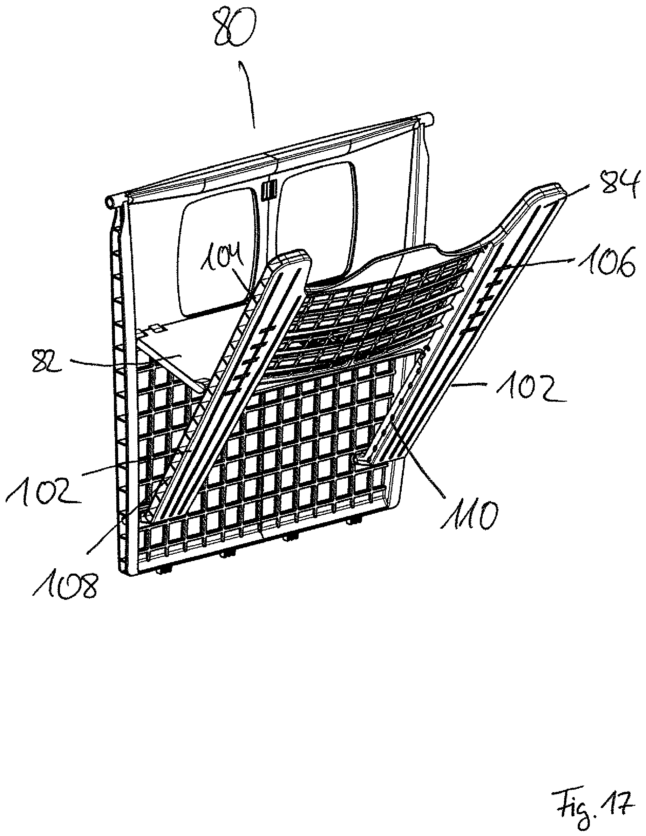

Die Rückenlehne 84 weist hohlkörperartige Holme 102 auf, die in ihrem Inneren mit Verstärkungsstreben versehen sind. Die Verstärkungsstreben 104 sind beispielsweise in Fig. 17 gezeigt, da diese an den außenliegenden Schmalseiten der Holme 102 ersichtlich sind, worüber die hohlkörperartigen Strukturen im Inneren der Holme zugänglich sind.

Die Hohlräume 106 befinden sich zwischen den Verstärkungsstreben 104, die im montierten Zustand im Bereich der Rückenlehnenwand 100 über auf der dem Korbinneren zugewandten Seite der Rückenlehne 84 angebrachte Öffnungen 108, die schlitzartig ausgebildet sind, zugänglich sind.

Zwischen den Verstärkungsstreben 104 sind im Bereich unterhalb der Rückenlehnenwand 100 ebenfalls Hohlräume 106 vorgesehen, die im montierten Zustand im Bereich unterhalb der Rückenlehnenwand 100 über auf der Holminnenseite befindliche punktartige Öffnungen 110 zugänglich sind.

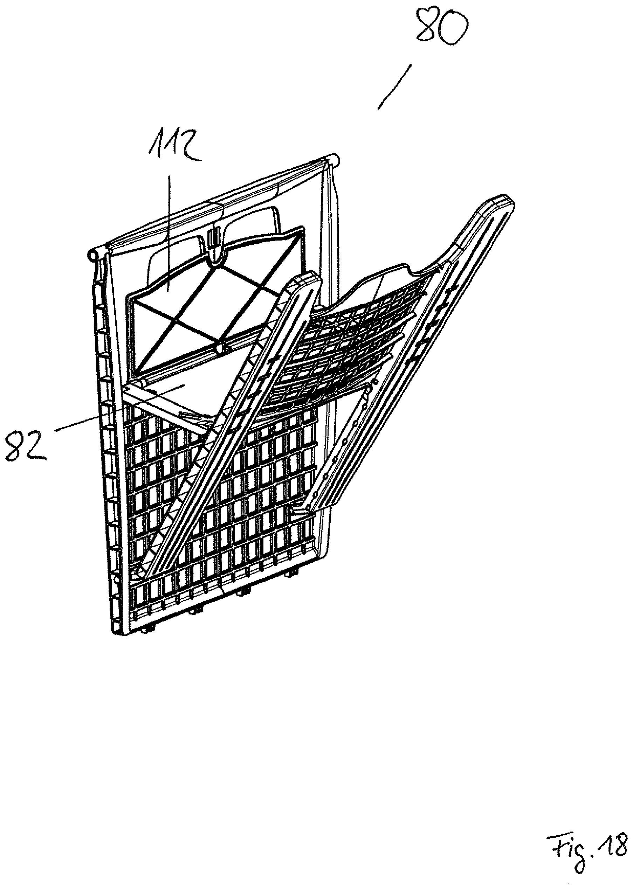

Wie weiter aus Fig. 18 ersichtlich ist, weist das Sitzbrett 82 eine Klappe 112 auf, die gegen die Wand 88 hochgeklappt werden kann.

Hierdurch wird es möglich, den Kindersitz 80 als Warenablage für kleinteilige Waren zu nutzen.

### Bezugszeichenliste

- 10: Stapelbarer Transportwagen
- 12: Fahrgestell
- 14: Korb
- 16: Tragrahmen
- 18: Drahtgestell
- 20: Rad
- 22: Radaufhängung
- 24: Drahtbügel
- 24a, b, c: Abschnitt
- 26: Querstrebe / Querverstrebung
- 28: Drahtrahmen
- 30: Rohrstück
- 32: Korbbefestigungsbügel
- 34: Querstrebe
- 36: Sperrklip
- 38: Verrastungsklinken
- 40: Neststruktur
- 42: Neststreben
- 44: Schiebegriff
- 46: Münzpfandsystem
- 48: Einschubblätter
- 50: Einschuböffnung
- 52: erste Schräge
- 54: zweite Schräge
- 56: Anschlag
- 58: Anschlag
- 60: Versteifungsrippen
- 62: obere Einschubblatthälfte
- 64: untere Einschubblatthälfte
- 66: Bolzenaufnahme
- 68: Befestigungsschraube
- 70: Kennzeichnungschip
- 72: Frontwand
- 74: Überdeckungswandung
- 76: Informationsfeld
- 78: transparente Abdeckung
- 78a: Einklipslasche
- 78b: Einklipslasche
- 80: Kindersitz
- 82: Sitzbrett
- 84: Rückenlehne
- 86: Schiebelängsführung
- 88: Wand
- 90: horizontale Achse
- 92: untere Begrenzung
- 94: nach unten führende Stützen
- 96: horizontale Achse
- 98: Rastnase
- 100: Rückenlehnenwand
- 102: hohlkörperartige Holme
- 104: Verstärkungsstreben
- 106: Hohlräume
- 108: Öffnungen
- 110: Öffnungen
- 112: Klappe

## Patentansprüche

1. Kindersitz (80) für einen stapelbaren Transportwagen (10) mit einer aus Kunststoff bestehenden, um eine horizontale Achse (90) verschwenkbar am Transportwagen (10) anzuordnenden Rückenlehne (84), an welcher wenigstens ein Sitz (82) schiebebeweglich oder verschwenkbar angekoppelt ist, wobei die Rückenlehne (84) einstückig ausgebildet ist und wobei zumindest ein Teilabschnitt der Rückenlehne (84) hohlkörperartig ausgebildet ist,
wobei die Rückenlehne (84) hohlkörperartige Holme (102) aufweist, die im Inneren mit Verstärkungsstreben (104) versehen sind,
**dadurch gekennzeichnet, dass**
die Verstärkungsstreben (104) an den außenliegenden Schmalseiten der Holme (102) ersichtlich sind,
wobei zwischen den Verstärkungsstreben (104) Hohlräume (106) vorgesehen sind, die im montierten Zustand im Bereich der Rückenlehnenwand (100) über auf der dem Korbinneren zugewandten Seite der Rücklehne (84) angebrachten Öffnungen (108), insbesondere Schlitze zugänglich sind und
wobei die Rückenlehne (84) im Wesentlichen H- förmig ausgebildet ist und
und wobei die Verbindung der beiden Schenkel der H-Form als Rückenlehnenwand (100) ausgebildet ist.

2. Kindersitz (80) für einen stapelbaren Transportwagen (10) nach Anspruch 1, **dadurch gekennzeichnet, dass** zwischen den Verstärkungsstreben (104) Hohlräume (106) vorgesehen sind, die im montierten Zustand im Bereich unterhalb der Rückenlehnenwand (100) über auf der Holminnenseite befindliche Öffnungen (110) zugänglich sind.

3. Stapelbarer Transportwagen (10) mit einem Kindersitz (80) nach einem der vorhergehenden Ansprüche.

## Claims

1. Child seat (80) for a stackable transport trolley (10), having a backrest (84) consisting of plastic which is to be arranged on the transport trolley (10) so as to be pivotable about a horizontal axis (90) and to which at least one seat (82) is coupled in a slidingly movable or a pivotable manner, wherein the backrest (84) is formed in one piece, and wherein at least a sub-portion of the backrest (84) is designed in the manner of a hollow body,
wherein the backrest (84) has hollow-body-like side members (102) which are provided in the interior with reinforcement struts (104),
**characterized in that**
the reinforcement struts (104) are visible on the outer narrow sides of the side members (102),
wherein cavities (106) are provided between the reinforcement struts (104) and, in the mounted state, are accessible in the region of the backrest wall (100) via openings (108), in particular slots, which are provided on that side of the backrest (84) which faces towards the basket interior, and
wherein the backrest (84) is of substantially H-shaped design, and
wherein the connection of the two limbs of the H shape is in the form of a backrest wall (100).

2. Child seat (80) for a stackable transport trolley (10) according to Claim 1, **characterized in that** cavities (106) are provided between the reinforcement struts (104) and, in the mounted state, are accessible in the region below the backrest wall (100) via openings (110) which are situated on the side-member inner side.

3. Stackable transport trolley (10) having a child seat (80) according to either of the preceding claims.

## Revendications

1. Siège pour enfant (80) pour un chariot de transport empilable (10) avec un dossier (84) constitué de matière plastique, à agencer sur le chariot de transport (10) de manière à pouvoir pivoter autour d'un axe horizontal (90), auquel au moins un siège (82) est couplé de manière à pouvoir coulisser ou pivoter, le dossier (84) étant réalisé d'un seul tenant et au moins une section partielle du dossier (84) étant réalisée en forme de corps creux,
le dossier (84) présentant des montants (102) en forme de corps creux, qui sont pourvus à l'intérieur d'entretoises de renforcement (104),
**caractérisé en ce que**
les entretoises de renforcement (104) sont visibles sur les côtés étroits extérieurs des montants (102),
des cavités (106) étant prévues entre les entretoises de renforcement (104), lesquelles sont accessibles à l'état monté dans la zone de la paroi de dossier (100) par des ouvertures (108), notamment des fentes, pratiquées sur le côté du dossier (84) tourné vers l'intérieur du panier, et
le dossier (84) étant réalisé essentiellement en forme de H et
la liaison des deux branches de la forme de H étant réalisée sous forme de paroi de dossier (100).

2. Siège pour enfant (80) pour un chariot de transport empilable (10) selon la revendication 1, **caractérisé en ce que** des cavités (106) sont prévues entre les entretoises de renforcement (104), lesquelles sont accessibles à l'état monté dans la zone en dessous de la paroi de dossier (100) par des ouvertures (110) se trouvant sur le côté intérieur du montant.

3. Chariot de transport empilable (10) avec un siège pour enfant (80) selon l'une quelconque des revendications précédentes.
